(19) Europäisches Patentamt
European Patent Office
Office européen des brevets

(11) EP 4 145 265 A2

(12) **EUROPEAN PATENT APPLICATION**

(43) Date of publication:
**08.03.2023 Bulletin 2023/10**

(21) Application number: **22193263.5**

(22) Date of filing: **31.08.2022**

(51) International Patent Classification (IPC):
***G06F 3/06*** *(2006.01)*

(52) Cooperative Patent Classification (CPC):
**G06F 3/061; G06F 3/0635; G06F 3/067; G06F 3/0685**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.09.2021 US 202163239571 P**

(71) Applicant: **Nyriad Inc.**
**Dover, DE 19001 (US)**

(72) Inventors:
- **INGLIS, Stuart John**
  **3216 Hamilton (NZ)**
- **LAMBERT, Sheridan John**
  **3216 Hamilton (NZ)**
- **FLEMING, Adam Gworn Kit**
  **3216 Hamilton (NZ)**
- **LAPIK, Dmitry**
  **3216 Hamilton (NZ)**
- **STOKES, Daniel James Nicholas**
  **3216 Hamilton (NZ)**
- **SIMMONDS, Cameron Ray**
  **3216 Hamilton (NZ)**
- **BALKRISHNAN, Pradeep**
  **3216 Hamilton (NZ)**
- **SCARAMUZZO, John Anthony**
  **3216 Hamilton (NZ)**
- **LAZARO, Matthew Sylvain**
  **3216 Hamilton (NZ)**
- **TURPITT, Jack Spencer**
  **3216 Hamilton (NZ)**
- **SHUKER, Rafael John Patrick**
  **3216 Hamilton (NZ)**
- **OUD, Leon Wiremu Macrae**
  **3216 Hamilton (NZ)**
- **PENNINGTON, Kevan**
  **3216 Hamilton (NZ)**
- **SETZ, Bernard Willis**
  **3216 Hamilton (NZ)**
- **CONNELL, Harrison Ian**
  **3216 Hamilton (NZ)**
- **HUNT, Herbert Dennis**
  **3216 Hamilton (NZ)**

(74) Representative: **Vidon Brevets & Stratégie**
**16B, rue de Jouanet**
**BP 90333**
**35703 Rennes Cedex 7 (FR)**

(54) **STORAGE SYSTEM**

(57) A system, comprising: a plurality of clusters, each cluster comprising two or more nodes and data storage; data storage comprising two or more storage arrays; each storage array comprising two or more storage devices; each storage device being configured to store data; each node being configured to receive requests to interact with data stored on a storage device; wherein the system is configured to provide at least two communication paths between any pair of components, the components comprising the nodes, storage arrays, and the storage devices.

100
CLUSTER 102
NODE 104
NODE 104
NODE MANAGER 106
LOAD BALANCER 108
STORAGE 110
STORAGE ARRAY 112
STORAGE DEVICE 114
STORAGE DEVICE 114
STORAGE DEVICE 114
STORAGE 110
STORAGE ARRAY 112
STORAGE DEVICE 114
STORAGE DEVICE 114
STORAGE DEVICE 114

FIG. 1

EP 4 145 265 A2

## Description

### FIELD

This relates to a storage system.

### BACKGROUND

Data is stored on one or more persistent storage devices. A persistent storage device is a device which stores data long-term, even without power. Examples of persistent storage devices include hard disk drives, or solid state drives using flash, Xpoint memory, or other types of persistent memory. When data is to be written, a storage controller receives the write request and causes the data to be written onto the persistent storage device via a data path. When data is to be read, the storage controller receives the read request and returns the data via a data path.

A storage system may comprise a plurality of storage devices, which may be of different types. These storage devices may be arranged into nodes, where a single node may have a plurality of storage devices. The nodes may further be arranged into clusters, where a single cluster may have a plurality of nodes. The system may have a plurality of clusters.

Resiliency against hardware failure is crucial for a robust storage system. Redundancy may be provided to avoid permanent loss of data in the event of a device failure e.g. a broken hard drive. In some cases, this may be achieved by having a piece of data stored on multiple of the storage devices, nodes, and clusters, such that a failure of any single storage device, node, or cluster (or in some cases a failure of multiple of these) does not result in data loss.

In further cases, this can be achieved with error correction codes (ECC). The encoding adds redundant data (such as parity data) to the raw data, such that if some raw data were to become temporarily unavailable, the full data could then be reconstructed using the remaining raw data and the redundant data. When data is located in stripes comprising the raw data and the redundant data, these may be called protected stripes.

### SUMMARY

In a first example embodiment, there is provided a system, comprising: a plurality of clusters, each cluster comprising two or more nodes and data storage; data storage comprising two or more storage arrays; each storage array comprising two or more storage devices; each storage device being configured to store data; each node being configured to receive requests to interact with data stored on a storage device; wherein the system is configured to provide at least two communication paths between any pair of components, the components comprising the nodes, storage arrays, and the storage devices.

### BRIEF DESCRIPTION

The description is framed by way of example with reference to the drawings which show certain embodiments. However, these drawings are provided for illustration only, and do not exhaustively set out all embodiments.

Figure 1 shows an example topology of a system.

Figure 2 shows an example arrangement of the hardware of a node.

Figure 3 shows an example arrangement of a cluster.

Figure 4 shows an example approach for fencing a node.

Figure 5 shows an example approach for administering active and passive nodes.

Figure 6 shows an example approach for metadata synchronization.

Figure 7 shows an example approach for implementing a read command.

Figure 8 shows an example process for reconstructing data.

Figure 9 shows an example approach for implementing a write command.

Figure 10 shows an example approach for implementing a trim command.

### DETAILED DESCRIPTION

The described system provides for improved data storage. Improved may be relative to one or more conventional approaches, such as one or more RAID configurations. The meaning of "improved" may be provided in one or more examples.

In a first example, "improved" may mean higher performance. This may be seen in one or more of the following aspects:

- The system may have higher performance in aggregate from the sum of the devices in terms of throughput, latency, input/output operations (IOPS), or any other metric.
- The system may have a more consistent performance, for example, by having a reduced variation in performance over a range of different workloads or with different numbers of failed components. That is, even as the workload increases and/or as an increasing number of components fail, the performance may decrease minimally, or at least proportionally less compared to conventional approaches.

- The system may have a higher performance when recovering data. When a component (such as a storage device) fails and the system recovers (for example, by recomputing the data from the failed storage device and re-writing it to a non-failed storage devices), the performance drop in doing so may be minimal.

- The system may be configured to improve performance by selecting a writing approach that optimizes the speed of the underlying devices. For example, the system may assemble small blocks for writing if this is shown to optimize writing performance.

- The system may be configured to distribute data to locations on the underlying storage devices that maximize performance for read and/or write. This can be contrasted with some conventional approaches where data is allocated to a fixed position.

- The system may combine multiple write operations to optimize the execution time. In this way, the system can provide an improved performance on the same amount of data compared to conventional systems.

- The system may track writing and reading. This can be analyzed to determine patterns which may in turn be used to optimize read and write performance and/or the distribution or location of blocks on the storage devices.

- The system may use the cache on active controllers asymmetrically to optimize total performance.

- The system may have a reduced write amplification compared to conventional approaches. That is, in some conventional systems, some write operations result in disproportionate multiple of blocks being written. This is particularly acute with random, non-sequential writes. However, the system's approaches avoid many of the weaknesses of conventional systems, and therefore reduces write amplification.

- The system may have the ability to perform dedicated compute-intensive tasks, such as encryption, decryption, and compression, without diminution of overall performance.

- The storage devices may be used to deliver maximum performance even when the load is coming from a single source.

In a second example, "improved" may mean higher resilience and/or reliability. This may be seen in one or more of the following aspects:

- The system allows a user to choose the level of resilience required. Because the system is inherently configurable, this can be selected according to user requirements. For example, a user may select an extended time before any technician repair is required (including up to multiple years), or may select how much storage is allocated to redundancy for more efficiency. This flexibility ensures the system meets each user's unique requirements.

- The system ensures there is resilience across all components, including a node or cluster as a whole. This minimizes the risk that a small number of devices in a given node could result in data loss. Instead, the system maximizes the number of component failures that could occur without degradation of storage performance.

- The system may progressively recover data when needed. For example, at the time that recovery is required, the system may reconstruct the minimum data to proceed. The remaining recovery can occur in the background, based on a prioritized selection of data to rebuild and balanced effort. This ensures that ordinary operation of the system is minimally disrupted, even when the system is operating in a degraded state.

- The system provides for enhanced checksums, error correction, and deduplication. These approaches may be adapted over time to ensure optimal data handling.

- The system reduces failure rates of devices. In hard drives, this can occur by avoiding high head movement (which may lead to hot drives and write amplification) by sequentially writing and load balancing. Alternatively, this can occur by minimizing cell updates and spreading load, for example in the case of NAND devices. This ensures that the system interacts with storage devices in a manner that maximizes their longevity with respect with the type of hardware, and therefore further decreases the chance of any hardware failure.

- The system inherently keeps records of any past data since updates to data do not immediately overwrite the original data. This provides improved traceability and data provenance, and enables a comparison between a current and previous version of the data.

- The system balances the load across multiple storage devices. This reduces the risk of wearing out a particular storage device unduly early, and avoids the need for hot spares.

In a third example, "improved" may mean higher efficiency. Efficiency may refer to cost and/or to the utilization of hardware. This may be seen in one or more of the following aspects:

- The system may have lower overheads. For example, through techniques described below, there may be no need for hot spares, and the system provides a higher proportion of the overall capacity of storage devices.
- The system may utilize all storage devices (in contrast to conventional systems which may keep some storage devices as unused until a failure occurs). The increased number of storage devices improves the overall performance.
- The system reduces the need for active administration to optimize performance. That is, minimal human input is required in the ordinary course of operation.
- The system reduces the need for emergency repair. Because of the resilience of the system even after a number of component failures, there is little need for an urgent replacement of a component.
- The system requires much less user-knowledge of the underlying storage devices since the system insulates any program from the deficiencies of any given storage device. This minimizes the need for write optimization and for performance placement administration.

In a fourth example, "improved" may mean higher simplicity and flexibility. This may be seen in one or more of the following aspects:

- The system may provide a unified user interface or API regardless of the number of different types of storage devices. This is possible because the user is insulated from the underlying storage devices.
- The system allows integration of customer specific micro services. This provides a level of flexibility and customization which were impossible with some conventional approaches.
- The system allows the adopting of new technologies as they are delivered. This is because the system is modular and is not tied to any particular kind of technology. In addition, because user operations are not exposed to the underlying technologies, the system can adopt technologies without disrupting user applications.
- A user may be able to execute programs or other functions in the same system as the storage occurs. This hyperconverged platform enables computational storage solutions.

A particular implementation of the system may be improved in any one or more of the ways noted above, or alternatively may simply provide an alternative to conventional systems. The manner in which the system provides improved data storage is set out below in various embodiments. These may be embodied in different combinations of hardware and software. This decoupling between hardware and software avoids many of the disadvantages associated with conventional systems.

## System Topology

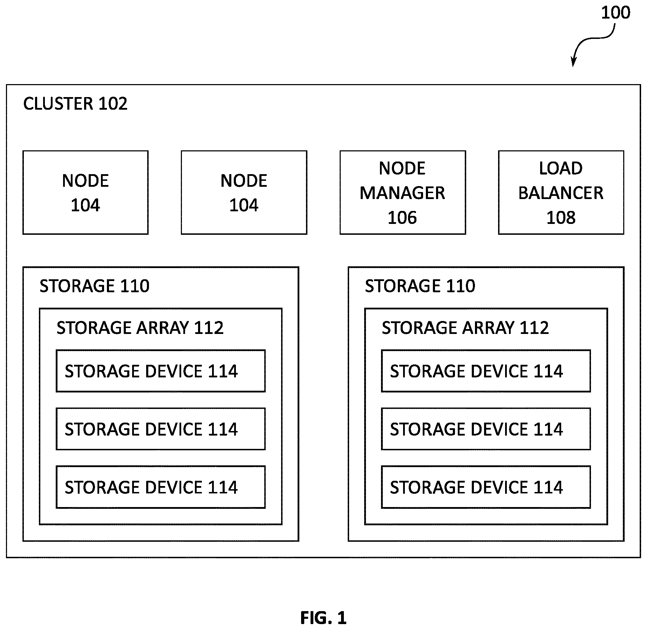

The system may be constructed according to a wide range of topologies. A general example of the construction is shown in Figure 1. The system 100 may be used to implement the approaches described below.

The system 100 comprises one or more clusters 102. Each cluster may be physically distanced from each other cluster, or two or more clusters may be collocated in the same physical location. In a preferred case, there is a level of physical distance between clusters to ensure that a single catastrophic event (such as a power outage or fire) occurring to one cluster does not affect the other cluster.

Each cluster comprises one or more nodes 104. Each node 104 is configured to receive requests to interact with data. For example, each node 104 may be configured to receive read or write requests. In a preferred case, each node 104 is able to access all data stored at the cluster. Consequently, each node 104 may maintain sufficient metadata to facilitate this. For example, each node 104 may maintain a metadata routing mapping to enable a logical location of data to be mapped to and from a physical location of data, and these mappings may be synchronized between the nodes. An example approach for synchronizing the state of nodes within a cluster is described further below.

Each node 104 may comprise one or more processors, a memory, and one or more peripherals. The processor, memory, and one or more peripherals may be interconnected via one or more data paths on a motherboard, via Infiniband, via Ethernet, or via any alternative technology.

A cluster may have a node manager 106 configured to manage the nodes. For example, the node manager 106 may facilitate synchronizing the state of the nodes. In some cases, the node manager 106 is one of the nodes 104. An example approach for operating a node manager 106 is described further below.

In some cases, the nodes 104 in a cluster have an active-passive scheme, such that one (or a subset) of the nodes 104 is configured to handle requests, while the remaining nodes 104 passively wait for promotion to an active state. This can improve overall reliability. An example approach for an active-passive scheme is described further below.

Additionally or alternatively, a load balancing node 108 may be provided to distribute incoming requests among the nodes 104. In one example, this may be based on the optimization of a performance metric, which may be read and/or write throughput or latency. This can ensure that a single node does not receive too many requests that would reduce the performance of the node 104 or the cluster in responding to requests. In other examples, this may reflect cluster capacities, data locality, security groups, or any of a number of alternative characteristics. In some cases, the load balancing node 108 may be the node manager 106 and/or a node 104.

Each node 104 is in communication with data storage 110. The data storage 110 represents the total storage space in the system 100. It can be organized into multiple levels.

In a first level, the data storage 110 comprises one or more storage arrays 112 which are configured to operate together. For example, as described further below, a storage array 112 may comprise a JBOD.

In a second layer, each storage array 112 comprises one or more individual storage devices 114. For example, as described further below, a storage device may be a hard disk drive, solid state drive utilizing flash or other persistent memory, or flash drive. In preferred cases, each storage device 114 in a storage array 112 is the same size, since in some cases all storage devices 114 operate as if they are the size of the smallest storage device 114 in the storage array 112.

In some cases, the storage array 112 may not be a physical enclosure. In some cases, the storage array 112 may be virtual, where the individual storage devices 114 are accessible over a network (such as a Mesh) and may located in different locations.

In a third layer, each storage device 114 is divided into a plurality of blocks; that is, each storage device 114 is a block storage device. In preferred cases, each block in a storage device 114 is the same size, and preferably each block in each storage device 114 in the storage array 112 is the same size.

In some cases, different storage arrays 112 and/or different storage devices 114 may be of different types. For example, the different storage arrays 112 and/or different storage devices 114 may be tiered based on performance, cost, or other characteristics. For example, a first storage array and/or storage device may have a relatively fast read performance, and a second storage array and/or storage device may have a relatively slow read performance. In some cases, one or more of the storage devices 114 may be an object store, such as a cloud-based cold store. This may be beneficial to allow data to be stored appropriately in view of how it may be used. That is, data which is frequently accessed or updated may be kept on the relatively fast storage array and/or storage device. In an alternative embodiment, one or more of the storage devices 114 may be an object store.

In use, each node 104 may act as a storage controller by directly interfacing with data storage 110. The node 104 as storage controller may implement this by running a driver on its processor. The driver may be a long-running kernel which receives instructions to retrieve or store data. The storage controller can then interface directly with each of the one or more storage arrays 112 and perform any necessary computations, such as encoding or decoding, encrypting or decrypting, compression or decompression, deduplicating, or logging.

For each of the clusters, nodes 104, storage arrays 112, and storage devices 114, the system may add more or fewer of each according to requirements. An increased number of each tends to lead to increased redundancy: that is more units can fail without impacting the performance of the system. Consequently, in a given implementation, the number of components may be selected to meet a preferred redundancy.

In some cases, the failure rate of different components may be monitored over time, and in particular, whether the failure rate leads to any temporary or permanent reduction in performance. This can be compared to a preferred level of redundancy with a view to optimizing the number and distribution of components.

*Deployment*

In some cases, the system may be deployed in a number of different contexts.

In a first context, the system may be located on premises: that is, located in a given location at a given premises (whether in the same location as the user or at a remote location, such as managed by a cloud provider). In this case, a user's applications are substantially collocated with the system at a location managed by the user.

In a second context, the system may be in the cloud: that is, the system is virtualized and may not be a single physical system located in any particular location, optionally together with the user's applications. A user may interact with the system through a network, such as the Internet.

In a third context, the system may be multi-site. That is, the system may have nodes (or other components) distributed across multiple physical locations. These may then communicate with each other over a network, such as over the Internet. A user may interact with the system through a network, such as the Internet. Each node may be on premises (in the first context above) or in the cloud (in the second context above).

In a fourth context, the system may be multicloud. That is, the system may operate together with one or more other cloud services. For example, data may be stored on different cloud services for redundancy, speed, or cost reasons.

A particular implementation may use a single context at all times. However, in some cases, a particular implementation may use multiple contexts, either at the same time or at different times. For example, a system may be both located on premises (for at least a portion of its storage and/or compute function) and be multi-cloud (for at least a portion of its storage and/or compute function). This flexibility may allow the system to operate tiering. For example, for a first piece of data, it may be stored locally in an on-premises context to allow for highspeed access, and for a second piece of data, it may be stored at a different site for slower, but cheaper storage. The system may therefore adjust the context for particular data, particular computation, or any other characteristic to meet the user's requirements.

*Multi-Path Redundancy*

In some cases, it is possible for a single node 104 to be able to access a single storage array 112. If a first node needs to obtain data from a second node's storage array, the request must be routed to the second node. This may have benefits in reducing the level of inter-node synchronization: since each node operates completely separately, there is little need to synchronize metadata stored across the nodes. In other cases, it is possible for a first node to obtain permission from a second node to access the data directly, such as through lock-based contention resolution. This may still minimize the level of inter-node communication.

However, such approaches may reduce the overall resilience of the system. That is, in a single node to single storage array paradigm, the failure of a single node may prevent or impede the performance in accessing the data at the corresponding storage array. Consequently, in preferred situations, it is possible for each of multiple nodes to access each of multiple storage arrays.

More precisely, between any two components, the system may provide multiple paths between the two. This may be called multi-path redundancy. The purpose of multi-path redundancy is to provide one or more backup options in case a particular link fails. A link between two components may fail even if both components are operating correctly. For example, if two components are linked by a cable and the cable becomes damaged, the two components may be unable to communicate even though each component is fully functional.

For example, within a cluster, each node 104 may be able to interact with a plurality of the storage arrays 110, and in preferred cases, may be able to interact with each of the storage arrays 110. This may be the case even if a storage array 110 is located in a different location from the node 104. One benefit of this arrangement is that a single node may directly access data stored at different storage arrays 110, which can improve overall performance. Another benefit is that if a first node fails, there is at least one other node that can handle all the requests that would have otherwise been handled by the first node. This can avoid any performance degradation even during hardware failure.

System 100 may be used to implement the methods noted above.

**Node**

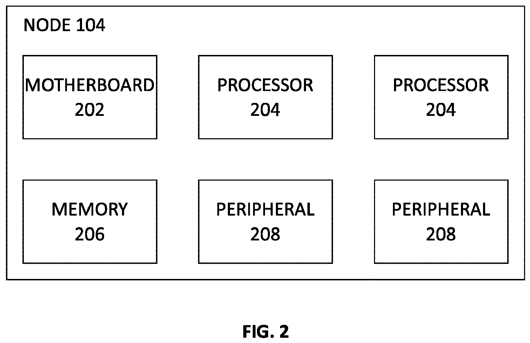

Each node 104 may be implemented using a variety of different hardware choices. Figure 2 shows an example arrangement of the hardware of a node 104. In some cases, the node 104 may comprise a motherboard 202, one or more processors 204, a memory 206, and one or more peripherals 208.

*Motherboard and Processor*

The motherboard 202 of each node is configured to receive one or more processors 204. Each processor 204 may be any of one or more types including CPU, GPU, ASIC, FPGA, or DPU and vector processing unit. In some cases, a processor 204 may be a RISC processor, such as ARM or RISC-V. The processor 204 may therefore comprise any one or more of the one or more types of processors 204. In some cases, the motherboard 202 and the processors 204 may be produced by or compatible with Intel, AMD, ARM, or any other platform. In some cases, the motherboard 202 and/or processors 204 may use proprietary extensions, such as AVX-512. In preferred cases, the system is largely agnostic to platform. In some cases, multiple types of components may be able to perform the same task but have different performance characteristics (such as throughput or latency), and so may be selected according to their preferred characteristics.

Preferably, the processor comprises a vector processing unit, which is a processor in which instructions are executed on an array of data. This can be contrasted with conventional scalar processors (such as a conventional CPU) which execute an instruction on a single item. This can allow a vector processor to process a large quantity of data much more quickly in certain operations, for example, matrix multiplications. In some cases, the processor may be a CPU or other processor which incorporated vector processing capabilities.

One example of a vector processor is a GPU. However, a vector processor may be implemented in other forms, such as an FPGA or ASIC.

In one example topology, a GPU comprises a number of SMs (streaming multiprocessors), typically between 1 and 30. Each SM has a shared memory and an instruction unit.

Each SM comprises a number of SPs (streaming processors), for example 8. Each SP has access to the shared memory and has a set of registers. Each SP may also have access to a global memory of the GPU. This global memory may be mapped to a main memory.

The SPs within an SM receive instructions from the same instruction unit. In this way, each SP within an SM typically processes the same instruction at the same time.

The GPU can be configured to run a kernel, which may be a program or function. The kernel may make use of the CUDA platform or other platforms. Kernels are commonly relatively short-lived (that is, on the order of seconds), as a watchdog timer may kill a kernel if it runs beyond a preset threshold. However, in some cases a kernel may be long-running, in that it can execute indefinitely until execution finishes. Although a kernel runs on a GPU, it is typically initiated by a local or remote CPU. In some cases, the kernel may switch execution between a GPU and a CPU.

A kernel is executed by a GPU executing a grid corresponding to the kernel. A grid consists of a number of blocks. There is typically no synchronization between blocks in a grid.

Each SM can execute a block of the grid. Typically, an SM can execute multiple blocks at the same time. The number of blocks on an SM may be limited by the capacity of the shared memory. Typically, a block does not move from one SM to another SM during the execution of the kernel.

Each SP can execute a thread of the block. In some cases, one SP can handle multiple threads at the same time. A thread is typically a computation comprising a number of instructions. Each instruction may take a number of cycles to perform, for example 4. Because of this latency, an SP can execute multiple threads at once. That is, while one thread is being executed, another thread can be started. Threads may communicate with one another via shared memory of the SM.

The GPU may have a SIMD (single instruction, multiple data) architecture. This means that a GPU may operate on the basis of warps. Each warp comprises a number of threads within a block which execute the same instruction in lockstep, though optionally on different data. For example, each thread in a warp may execute an additional instruction to the numbers stored at different memory addresses. In addition, each thread within a warp may be configured to fetch data from memory at the same time.

A warp is resilient on an SM, such that each thread in a warp may be executed by a different SP within an SM. The warp size (that is, the number of threads within a warp that can be executed in lockstep) may be a predetermined value, such as 32. An SM may have multiple resident warps.

In this way, a single kernel can utilize the full processing capabilities available on a GPU. This can result in a kernel being executed significantly more quickly in comparison to a scalar processing unit.

One particular benefit of GPUs (or other vector processors) is the high performance of certain kinds of encoding and decoding, such as erasure encoding and decoding. The system may be configured to provide high performance erasure encoding and decoding using its GPUs (or other vector processors).

A CPU may comprise multiple cores and may comprise a multi-level cache.

In one example embodiment, the node 104 comprises at least one CPU. The CPU may be an Intel CPU or an AMD CPU. In another example embodiment, the node 104 comprises at least one GPU. The GPU may be an NVidia GPU or an AMD GPU.

Where the processor of a node 104 comprises multiple processing units, regardless of whether they are of the same type, the multiple processors may operate independently or cooperatively.

*Memory*

The motherboard 202 of each node 104 is configured to receive memory 206. The memory 206 is configured for use in storage operations, including writing data from memory to storage (data write) and reading data from storage into memory (data read).

In some example embodiments, an instruction to write data is first received at a block device interface. The instruction comprises a memory location of the data to be stored. This memory location may be in a pinned memory of a node 104. The pinned memory is memory accessible by a vector processor and one or more other processors. The vector processor can then perform one or more invertible or non-invertible transforms on the data. The data can then be asynchronously written from the memory location in pinned memory to one or more storage devices. In this case, "asynchronously" refers to the data being written to memory and the data being written to the one or more storage devices not necessarily being immediately sequential.

Memory is configured to retain data for a period. In a preferred arrangement, the memory is configured for persistent storage of data. That is, data stored at the memory will be retained in the memory indefinitely, even if there is power loss.

In this context, "memory" need not be RAM. For example, the memory may comprise flash memory, ferroelectric RAM (FeRAM), conductive bridging RAM (CBRAM), phase-change memory (PRAM), Racetrack memory, Nano RAM (NRAM), Resistive RAM (ReRAM), Millipede memory, NVMe storage devices, Optane storage devices, or any other equivalent technology.

Preferably, multiple processors can access the same memory without the need for duplicating the data to memory associated with each processor. This may be called "zero-copy" because the data need not be copied from one memory to another. The benefit of a zero-copy approach is that this reduces delays associated with multiple processors. For example, copying data between memory may be limited to occurring at a maximum bus speed. The maximum bus speed is orders of magnitude slower than a processor could operate on the data. Consequently, in this arrangement, the maximum bus speed would fundamentally limit the performance of the system where copying is required. However, by using zero-copy memory access, this is no longer a limit. Consequently, utilizing a "zero-copy" approach can improve overall system performance.

One approach for implementing a zero-copy approach is to use pinned memory. Pinned memory is a portion of memory which is accessible by multiple types of processors via direct memory access. In some cases, pinned memory may be unified memory which is physically located in main memory. Pinned memory may be accessible by a vector processor (such as a GPU) and one or more other processors (such as a CPU) directly over a bus. In this way, both processors may operate on the same data in memory without any need for the memory to be copied.

Pinned memory can be contrasted with non-pinned memory which requires data to be copied to memory associated with each processor or processor type. For example, if data was stored in memory associated with a CPU, the data would need to be copied to memory associated with the GPU before the GPU could process the data.

Utilizing no-copy memory can therefore decrease the overhead when switching between processors or processor types.

In some embodiments, the pinned memory is physically part of non-volatile memory, comprising one or more non-volatile memory chips. In this regard, "non-volatile" may be considered to mean that the memory maintains the stored data even without power. Non-volatile memory contrasts with volatile memory in which power must be maintained constantly for the data to be retained.

Non-limitingly, the non-volatile memory may be any one or more of flash memory, ferroelectric RAM (FeRAM), conductive bridging RAM (CBRAM), phase-change memory (PRAM), Racetrack memory, Nano RAM (NRAM), Resistive RAM (ReRAM), and Millipede memory. In a specific example embodiment, the non-volatile memory comprises Intel's Optane Memory.

Typically, the memory provides a reduced latency in writing than the underlying storage devices particularly for small writes. Thus, by deferring writing to the storage devices (for example by configuring part of the memory as a writeback cache), the slower speed of the storage devices does not delay the write speed. Moreover, repeated writes of the data already in the memory can be fast since there is no need to retrieve the data from storage. Because the memory is non-volatile, the data is not lost if there is a power failure. This can reduce the risk of maintaining data in memory for a substantial period.

A further benefit of delaying writes through the use of memory can minimize wear to the storage devices. This can improve the overall life of the storage devices. These approaches can therefore provide a significantly improved write speed with minimal risk of data loss.

Some kinds of memory have a level of error correction built in. Such memory may be called "ECC" memory. This reflects that memory can, from time to time, have bit errors or other kinds of errors that would lead to erroneous data. However, ECC memory may be limited in the number of errors it can correct. Consequently, the system may add a further layer of error correction to the memory. For example, when data is stored in the memory, the data may be encoded so as to allow a larger number of errors to be corrected. This can lead to more reliable data storage in the memory.

Non-limitingly, the volatile memory may comprise dynamic RAM (DRAM), static RAM (SRAM), LR-RAM, Optane memory operating in a volatile mode, or a combination of any of these with or without other kinds of volatile memory.

In some cases, the memory of a node comprises one or more pairs of non-volatile memory, such as a pair of NVDIMMs. In use, data written to one of the non-volatile memory modules is mirrored on the other. In some cases, this may be supplemented with a battery backup or other means of supplemental power supply that can be utilized after the loss of the primary power supply. This can provide a level of resilience in case of data loss.

## Cache

The system comprises a cache. In one example, the cache may be used as a write-back cache. In some cases, the cache can store data that is written or read, which may improve the overall performance of the system. Further examples of the use of the cache are described below.

The cache may be implemented on any appropriate hardware. The type of hardware used may be selected on the basis of preferred performance, cost, or other characteristics.

In one embodiment, the cache is implemented using memory. For example this may involve the use of non-volatile memory alone or in combination with volatile memory. The non-volatile memory may be configured as non-volatile dual in-line memory module (NVDIMM).

In another embodiment, the cache is implemented using non-memory storage. For example, the cache may be implemented using NVMe storage devices, Optane storage devices, or any other storage devices in the system.

The write cache is preferably non-volatile. This means that data stored in the cache is not lost when the cache loses power.

The cache may be implemented using multiple kinds of device and these may be tiered. For example, the cache may comprise a relatively fast but small memory and relatively slow but large storage. These may each be utilized to optimize overall system performance. For example, data may be stored in the appropriate speed cache depending on the expected speed requirements of the data, or any other preferred characteristics.

## Storage

A storage array 112 may be an enclosure, and each enclosure can be a standalone unit. In this sense, a standalone unit means that the JBOD may be installed and physically arranged separately from other enclosures at the node. This means that a particular JBOD may fail and be subsequently replaced independently of any other JBOD of data storage.

The storage array may have any number of storage devices. In one example embodiment, the storage array comprises 32 individual storage devices. In another example embodiment, the storage array comprises 48 individual storage devices. In another example embodiment, the storage array comprises 72 individual storage devices. In another example embodiment, the storage array comprises 90 individual storage devices. Each storage array 110 may be provided with a host bus adapter to allow connectivity to each storage device.

The plurality of individual storage devices in a storage array may comprise a disk, such as a hard disk drive (HDD) having a physical disk that rotates in operation, or it may alternatively be a solid-state drive (SSD) that uses flash or any other persistent memory and having no physically rotating disks.

In some embodiments, the storage device may be a zoned storage device. This is described further below.

A storage array or node may comprise sensors that monitor in substantially real-time the performance and/or status of each individual storage device. This can allow for ensuring that storage devices are operating correctly.

In some cases, the storage array 112 may not be a physical enclosure. In some cases, the storage array 112 may be virtual, where the individual storage devices 114 are accessible over a network (such as a Mesh) and may located in different locations. In this case, the storage array 112 may have any number of virtual storage devices 114.

<u>Interfaces</u>

The storage system comprises hardware configured to enable different parts of the storage system to interface with one another.

At a low level of abstraction, the storage system comprises one or more buses that interconnect electrical componentry in the storage system. For example, a bus may connect a processor to a memory in a node, thereby allowing data transfer between the processor and the memory.

A bus will be configured appropriately given the particular topology being implemented. Such configuration can include providing additional componentry as appropriate. In the case of a PCIe (PCI Express) topology, as an example, a bus comprises a root complex, and each peripheral and processor of a node is a PCIe endpoint. PCIe switches are also provided to allow for connection to further peripherals such as storage devices.

Non-limitingly, other topologies include IB (InfiniBand), iSer (iSCSI Extensions for RDMA) and ISCSI, FC (Fibre Channel) and FCoF (Fibre Channel over Fabrics), NVMeoF (Non-Volatile Memory Express over Fabrics), TCPoF (Transmission Control Protocol over Fabrics), CXL (Compute Express Link), RDMA over Converged Ethernet (RoCE), or other technologies. A combination of modified versions of any of these topologies may be used.

Preferably, the storage system comprises one or more NICs (network interface controllers) to allow communication between nodes in a network. Nodes may be connected directly or via intermediate components, such as one or more switches. Further, the network may preferably be a fabric (or unified) computing network. A lumped storage device or a head node may be treated as a node in the computing fabric.

In an example embodiment, the one or more NICs comprises a Mellanox SmartNIC.

<u>Form</u>

In some embodiments, all components of the system (optionally other than storage devices) may be integrated into a single device. For example, the device may be a card, board, chip, or other device. In some cases, this may operate or be presented in a similar manner to a legacy RAID card. This may allow a simple means to install and administer the system.

**Clusters**

In some cases, multiple nodes (such as node 104 in Figure 2) are provided in a cluster.

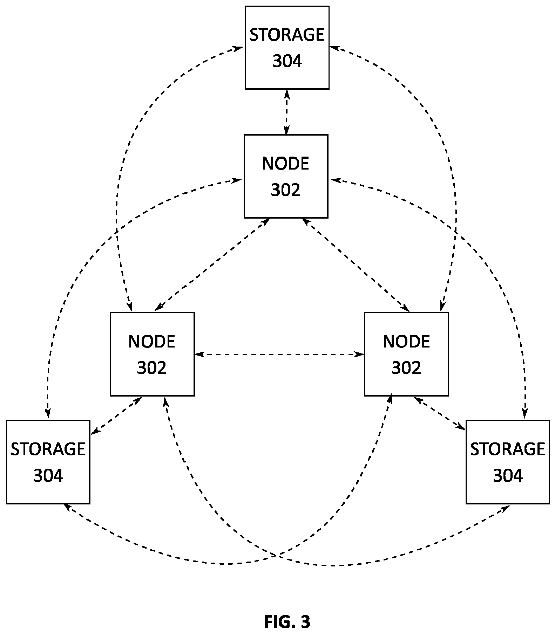

Figure 3 shows an example of how this may be accommodated. The system comprises multiple nodes 302 which are in communication (whether direct or indirect). Each node 302 may be node 104 of Figure 2. The nodes 302 may be physically separated (for example, in different locations), or may be physically co-located or logically separated.

Each node 302 can be connected to one or more other nodes 302. This communication may be via a direct connection (such as over Mellanox/Infiniband). In a simple case, each node 302 may be in direct communication with each other node 302. However, in some cases, some nodes 302 may act as relays to allow indirect communication. This may be particularly appropriate where there are a large number of nodes, as the number of direct connections increases exponentially relative to the linear increase of nodes. In further cases, the communication may be indirect and across a network. For example, the network may be shared between multiple nodes 302.

Each node 302 may be in communication with one or more storage devices in storage arrays 304. These may be collocated with the node 302 or may be separately located. In preferred embodiments, there are multiple paths between each node 302 and each storage array 304. This provides a level of resilience against the loss of a particular connection as well as an increase in overall bandwidth.

In a preferred embodiment, data is stored with two-dimensional resilience. In a first dimension, the data may be replicated across different storage devices 206. In a second dimension, the data may be replicated within a single storage device 206. This allows for the loss of a storage device 206 without the loss of any data. The data may be stored such that, in a single dimension, the data is spread across n storage devices 206. The data is configured to be recoverable from recoverable from any $k$ storage devices ($k \leq n$). Consequently, no storage array 304 may have more than $n$ - $k$ storage devices storing a given piece of data.

In some cases, each node 302 comprises a metadata store. The metadata stores records what data is stored at that node and the physical location of that data. The metadata store may therefore be a map of logical addresses to physical addresses at the node.

In other cases, the metadata store may be shared by multiple nodes. For example, the metadata may be stored at the storage devices which are accessible by multiple nodes.

In use, it can be beneficial for nodes and clusters to have a further shared database to allow for coordination. This may be shared across multiple nodes across multiple clusters, and therefore can allow intercommunication across a series of clusters. Periodically, each node may put appropriate data into the database. For example, each node may insert hardware status, encoding status, or other information. Because this is shared across the nodes, a user may obtain a full state of the clusters through a single node. The shared database may be distributed over the multiple nodes and clusters. In this way, there need not necessarily be a central management server or the like. This can avoid the disadvantages of a centralized system, such as a risk of failure.

In some embodiments, one node of a cluster may be configured to coordinate the configuration of other nodes or other clusters. For example, a first node (such as an active node of a cluster) may be configured to create a volume in a cluster. The first node then causes all other nodes to rescan their volumes, and this may in turn trigger each node to update the shared database.

*High Availability*

A benefit of the cluster is to enable high availability. For example, this may be system availability of 99.999% or above (that is, when data can be read from the system).

In the simplest case, the cluster may comprise two nodes. The cluster may be that shown in Figure 3. By duplicating the number of nodes, a whole node may fail without necessarily any loss of functionality. Over time, it is likely that a single node will suffer some kind of hardware failure at some point even if this is a relatively rare event. In some environments, a cluster of two nodes may be sufficient.

However, the size of the cluster may freely scale upwards with minimal overhead growth. That is, the overhead in administering multiple nodes is relatively low. In some schemes, all nodes are simultaneously active, and since all nodes can respond to requests for data irrespective of where the data is stored, additional nodes tend to increase the overall performance as well as reducing the overall risk. In addition, additional nodes allow an active-passive scheme (noted below) which can allow a node to fail with negligible downtime.

*Synchronizing cache*

In preferred embodiments, each node 302 has a cache. This cache may be synchronized with the cache in one or more other nodes 302 in the same cluster or optionally in different clusters.

In such a situation, it can be beneficial to synchronize the state of the cache in multiple nodes. This can provide a level of redundancy: since all data is replicated in at least one other cache (and optionally in the cache of multiple other nodes).

Synchronizing the cache may occur whenever the state of a cache changes. For example, in a write operation, data may be added into the cache. In this situation, the data being written to a first cache may additionally be written to one or more other caches in one or more other nodes. This may need to be completed before the write is regarded as complete. This ensures that data that is reported as written is stored with sufficient redundancy.

In another example, data may periodically be moved from the cache to a storage device. When this occurs, it is beneficial to avoid each cache writing the same data to a storage device. Consequently, the system may ensure that after data is written from a first cache to a storage device, the same data is removed from the other caches. This synchronization avoids needless rewriting of the same data.

One effect of this approach is that it is simple to recover any device or any node. Because data is stored in multiple caches, a node can fail without any risk of data loss.

In some cases, the cache of a node may need to be re-synchronized with one or more other caches. For example, this may occur if the node has been newly added or if it has been decided that the cache of the node should now been synchronized. In this case, the data in a cache may be copied entirely to another cache. That is, the data of an existing cache is duplicated to another cache. Once this occurs, the two caches may remain synchronized in the manner noted above.

*Synchronizing metadata*

A synchronization process operates on one or more of the nodes 302. The synchronization process ensures that all nodes 302 have common metadata. This allows a read request to be handled by any node 302.

Since that node 302 has up-to-date metadata (even if the data is stored at a different node), that node 302 may resolve the request through forwarding the request to the appropriate node and/or by obtaining and returning the data from the appropriate node. In addition, this enables write requests to be handled from any node 302.

Synchronization may just occur for changes. Where data is stored sequentially, there is a monotonically increasing counter per stripe within each node. Each time there is a new write, the counter increases. Each propagation of changes to metadata therefore maps to a particular counter value. A subsequent propagation only needs to relate to those metadata entries that have occurred after the last counter value. In alternative arrangements, a bitmap, hash map, or other map may be used to determine the set of entries that need to be propagated.

The synchronization process may run continually (in real-time or substantially real-time). There may be a relatively small lag between a change in metadata (for example, because new data has been written in one node) and when that change is propagated to all the nodes. In practice, this lag may be reduced to a negligible level if the process propagates changes immediately. In preferred cases, the changes are propagated as soon as they are made, and the write request is only reported as complete after sufficient propagation has occurred. This has the benefit of requiring a sufficient level of resilience for metadata, since all changes are stored in multiple nodes before a write is completed.

The synchronization process may operate on a single node 302 which is tasked with synchronization. In this case, synchronization may occur using polling. The dedicated synchronization node requests changes from each other node continuously. This may occur in a round robin style (where the synchronization node requests changes from each node in turn), in a random manner (where the synchronization node polls each node randomly), or any other approach. If a node is recovering from a failure, it may synchronize its metadata immediately.

Alternatively, each node 302 may propagate its own changes through the cluster of nodes. This may occur through broadcasting updates. Where not all nodes are in direct communication and the updates must be relayed through intermediate nodes, the updates may be propagated in a way to avoid a broadcast storm. For example, each node may only forward updates that it has not already received (as determined by an identifier, a timestamp, or other mechanism).

A hybrid approach may also be used. For example, when there is a change to the metadata of a node 302, the node 302 may send its update to a limited number of synchronization nodes (which may be one, or a small proportion of the overall nodes). These synchronization nodes can then propagate the update.

These approaches ensure that all nodes 302 have accurate metadata for the data that is stored in the system.

One effect of this approach is that it is simple to recover any device or any node. Because the metadata has a relatively high redundancy, on the failure of a node, the metadata is not affected.

**Cluster Controller**

In some embodiments, the cluster of nodes may comprise a cluster controller. The cluster controller administers the cluster. The purpose of this is generally to improve the overall throughput or resilience of the cluster. Consequently, the cluster controller may be provisioned with various functionality to enable this.

The cluster controller may be a separate component which administers the cluster, or alternatively may be one (or a subset) of the nodes which is tasked with the cluster controller functionality. In this case, the one (or the subset) of the nodes may be determined randomly, by a round robin technique, by processing capability, by latency, or any other approach. The cluster controller may also be the synchronization node.

The cluster controller may be configured to determine which nodes are functional. A functional node is a node which can handle requests, such as a write request or a read request.

A non-functional node may have lost power. In this case, the node may be entirely non-functional. This may be determined by the node failing to respond to a ping or failing to send a heartbeat.

Alternatively, a non-functional node may be in a degraded state. This may be apparent where the node is responsive to pings or requests but at a high latency.

In response to determining a non-functional node, the cluster controller may raise an alert state in respect of the node. The alert state may trigger an update to a user interface, an entry in a log, or another kind of feedback to a user. Additionally or alternatively, the cluster controller may take action to remedy the non-functional node.

In response to a node being non-functional, the cluster controller may remove the node from the cluster.

Periodically, the cluster controller may check the status of a previously non-functional node with a view to re-adding the node to the cluster when it becomes functional again. This is particularly beneficial where the node is non-functional due to latency. After a period, the node may have self-healed, or otherwise have changed its state to remove the cause of the latency. In this case, the node can be re-added to the cluster.

The cluster controller may be configured to determine which nodes are connected. Connected in this case means that the node is able to communicate with other nodes. This may be via a direct connection or an indirect connection. In some cases, a node may be functional but not connected. For example, if there is a failure in the network connecting two nodes, each node may remain fully functional but unable to connect.

This may be determined by the cluster controller periodically checking different routes between nodes. For example, if one route to a node results in a failed request, but another route to a node results in a successful request, then this could indicate a connection error.

In response to determining a connection error, the cluster controller may raise an alert state in respect of the node or the connection. The alert state may trigger an update to a user interface, an entry in a log, or another kind of feedback to a user. Additionally or alternatively, the cluster controller may take action to remedy the error.

*Fencing*

In the ordinary case, it may be undesirable for a node to be non-functional. This is because a non-functional node cannot handle requests.

However, in some situations, a functional node may malfunction. For example, if the node is suffering high latency, requests to that node may be unacceptably slow. In another example, the node may have bugs or other problematic software or hardware which causes errors.

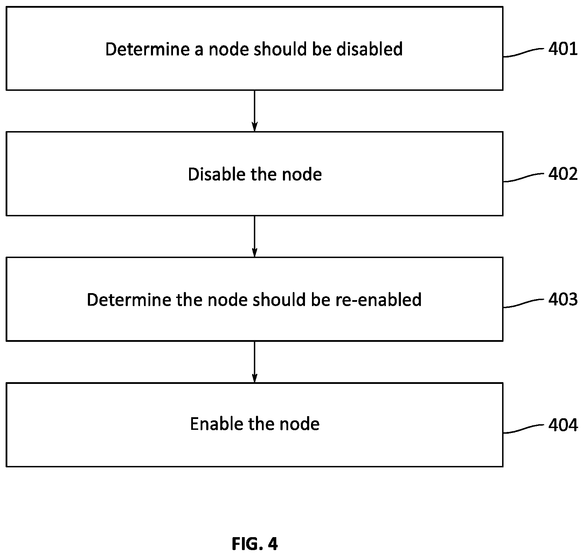

Where a node is malfunctioning, the cluster controller may determine that the cluster overall would operate better if the node were non-functional. Figure 4 shows an example process for this.

At step 401, the cluster controller determines that one node in the cluster of nodes should be disabled.

This may occur through noting the latency of requests, through noting the number of failed requests, through reporting by the node as to its status, or through other means.

At step 402, the cluster controller disables the node.

The purpose of this is to prevent the node from handling requests. In one example, this can occur by the cluster controller removing a node from the cluster. In another example, the cluster controller may power off the node. This may trigger failure recovery.

At step 403, the cluster controller determines that the node should be re-enabled.

Generally, this occurs when either the problem has resolved, or a sufficient time has passed that the situation may have been resolved. In a first example, the cluster controller determines that the situation which led to the determination at step 401 is no longer applicable. For example, if the node was disabled because of a hardware failure, once the hardware has been replaced (or alternative recovery has occurred), then the node may be ready to be re-enabled. The cluster controller may make this determination on the basis of reporting from the node and/or from input from a user.

In a second example, the cluster controller may periodically attempt to re-enable the node to determine if the node is no longer malfunctioning. This may be particularly useful for issues which occur occasionally but resolve in time. For example, while a node is undergoing recovery, this may cause delays in handling requests. However, once the node completes the recovery, the delays may no longer occur (and are unlikely to recur).

The length of time that a node is disabled may be a function of the number of times that a node has been disabled. For example, the first disabling period may be 1 minute, the second disabling period may be 1 hour, and the third (or subsequent) disabling period may be 1 day. This prevents a legitimately faulty node from being re-enabled regularly, while allowing a node that had a transient issue to re-enter the cluster promptly.

At step 404, the cluster controller enables the node.

This occurs to undo the approach used at step 402. For example, if step 402 involved removing power from the node, step 404 enables power to the node.

In this way, the cluster controller may selectively disable nodes from the cluster to improve overall performance. Since the cluster has appropriate failure recovery, simply removing a malfunctioning node may improve performance with negligible disadvantages.

*Promotion*

In some cases, the system may operate according to an active-passive scheme. In this scheme, one (or a subset of the total nodes) is designated as the active node. Requests are received by the active node. The remaining nodes are designated as passive nodes. Requests do not conventionally get sent to passive nodes. Other than the designation of active or passive, the nodes may be identical (or similar) in functionality.

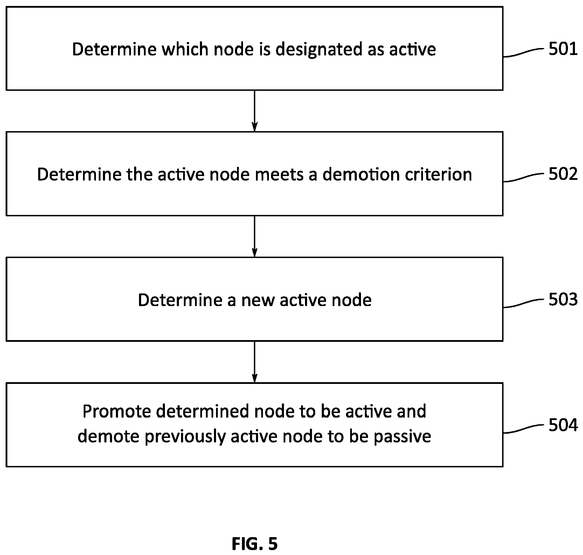

The cluster controller may administer the designation of active or passive. An example approach for this is shown in Figure 5.

At step 501, the cluster controller determines which node (or which subset of nodes) is designated as active. This may occur based on resource availability, expected load, expected latency, or any other characteristics. Alternatively, the cluster controller may rotate through the nodes in a round robin fashion or randomly. The latter approach may be particularly applicable where all nodes are identical in resource.

At step 502, the cluster controller determines that the active node meets a demotion criterion. The demotion criteria relate to situations in which the active node can no longer adequately handle requests.

A first demotion criterion may be that the active node is non-functional or disconnected or is likely to become non-functional or disconnected. For example, this may consider diagnostics or other information for the active node.

A second demotion criterion may be that a different node would provide higher performance. For example, where the nodes are located in different physical locations, one node may provide higher throughput for the expected requests.

A third demotion criterion may be that the node has too high latency. This may occur due to a lack of processing resource, insufficient cache, connection difficulties, or sometimes random chance.

A fourth demotion criterion may be that the current active node has been the active node for a sufficiently long time. In some cases, there is a benefit to periodically changing the active node. Consequently, a threshold time may be set at which the active node is changed. Once a node has been the active node for more than the threshold time, the active node may then be changed.

At step 503, the cluster controller determines a new active node. This may occur in the same manner as step 501, or in a different approach.

At step 504, the cluster controller promotes the node determined at step 503 to be an active node and demotes the previously active node to be a passive node.

This may occur substantially instantaneously. This can avoid any delay or any loss of data. However, where requests are received during the promotion-demotion process, they may be regarded as failed and need to be re-sent. In some cases, requests which were sent to the previously active node may be handed off to the new active node or may be processed as if the previously active node were still active.

A benefit of the promotion-demotion approach is that there is minimal delay and disadvantage in switching between nodes. Consequently, the threshold for switching can be low. For example, any time it appears that a node will become non-functional, it can be demoted immediately.

*Load Balancing*

In some arrangements, there may be multiple active nodes. This may be particularly useful where the number or type of requests are unlikely to be sufficiently satisfiable by a single active node.

In this way, multiple active nodes can avoid a limit in the overall performance of the cluster.

*Metadata Resynchronization*

In some cases, a node may no longer have up-to-date metadata. This means that at least some metadata is missing and/or at least part of the metadata does not correctly translate between logical and physical addresses. For example, this may be due to hardware failure, such as the storage device that stores the metadata failing, from the node being promoted from passive to active, from bitrot or other data degradation as determined by a failed checksum or other error detection.

Where this occurs, the cluster controller may arrange for metadata recovery, where the metadata of the node is resynchronized with other nodes. The node which has suffered metadata loss may be termed a degraded node.

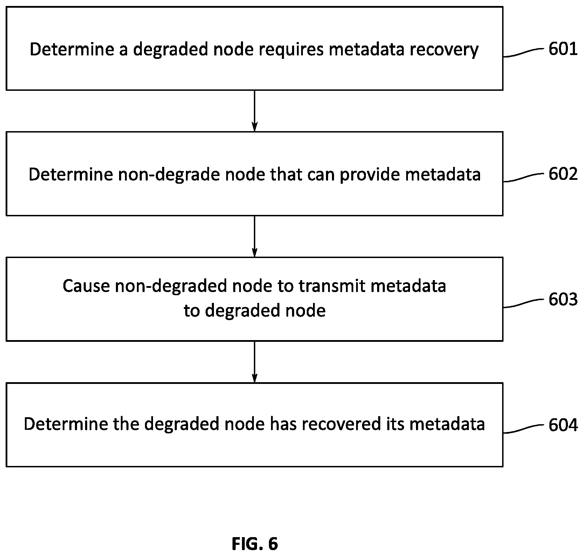

One example of this is shown in Figure 6.

At step 601, the cluster controller determines that the degraded node requires metadata recovery.

The cluster controller may temporarily remove the degraded node from the cluster. That is, the degraded node will not be able to handle requests while in a degraded state.

At step 602, the cluster controller determines one or more non-degraded nodes which can provide metadata to the degraded node. The cluster controller may select a subset of the nodes based on which nodes have a sufficiently low load or latency, or other characteristics. Alternatively, the cluster controller may select the non-degraded nodes randomly.

At step 603, the cluster controller causes the non-degraded nodes to transmit sufficient metadata to the degraded node.

Sufficient metadata in this case means enough for the degraded node to recover all the metadata that it is intended to have. For example, this may be the complete copy of the metadata. In other cases, this may be a subset of the metadata that, when combined with the degraded metadata at the degraded node, enables recovery without a full transfer of the metadata.

In the latter case, the degraded node may then perform metadata recovery. This may involve performing error correction, decoding, or other processing to obtain the complete metadata.

At step 604, the cluster controller determines that the degraded node has recovered its metadata. In this case, the cluster controller may allow the formerly degraded node to re-enter the cluster. The formerly degraded node may then handle requests again.

In this way, the cluster controller may mediate metadata recovery.

**Storage Paradigm**

The system described above may be configured accordingly to one of a plurality of storage paradigms. For example, the system may be configured as a block storage device, a file-based storage device, or an object-based storage device. The selection of a paradigm depends on the intended use. This flexibility allows a single system to be configured for multiple uses.

*Block Storage Device*

The system may be configured as a block storage device. Block storage is where data is stored in blocks of a specified size. Each block has a unique identifier. The blocks need not be semantically related. For example, two adjacent blocks may be for unrelated data, and a single file may be spread over multiple non-contiguous blocks.

One benefit of a block storage device is that it can be generally accessed by many other systems and using various other technologies.

For example, a block storage device may be accessible over appropriate interfaces. Example interfaces include Ethernet, Infiniband, Fiber Channel (FC), FCoF, iSCSI, iSCSI Extensions for RDMA (iSER), SCSI RDMA Protocol (SRP), NVMe over Infiniband, NVMe over RoCE, or any other appropriate protocol. It can be compatible with VMware, BeeGFS, Kubernetes (through Container Network Interface (CNI) or Container Storage Interface (CSI)), or any other appropriate technology. In some cases, the system may add further features on top of existing block device technology. For example, the system may add further parity or checksumming. This can add further reliability to existing technology.

The interface for the block storage device may expose a number of commands, such as read, write, trim, and flush. These commands may resolve appropriately based on logical addresses of data. This obscures the implementation details of the storage device, and therefore provides flexibility for the system to store data efficiently and resiliently without affecting processes that access the data.

## Read

A read command requires the system to obtain data according to a specified logical address. As noted above, the system maintains a map of logical address (that is, a nominal identifier for a block) to physical address (that is, where the data is actually stored).

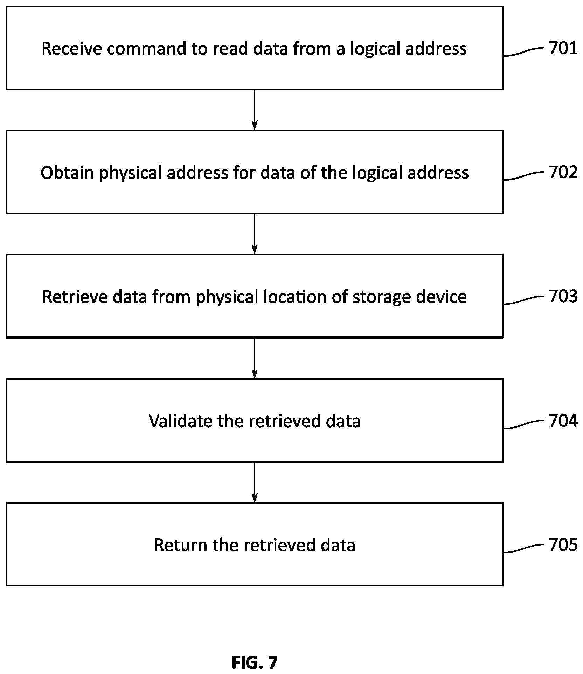

Figure 7 shows an example approach for how a read command is handled.

At step 701, a command is received to read data from a logical address.

At step 702, a physical address for the data corresponding to the logical address is obtained. This may be obtained by finding the logical address in the mapping of the metadata and finding the corresponding physical address. Where there are multiple nodes, each node maintains a copy of the metadata and consequently could obtain the corresponding physical address. The physical address indicates one or more storage devices and a physical address at each such storage device. In some cases, the metadata may indicate multiple physical addresses. These may provide alternative options in case any of the physical addresses is inaccessible. In any case, the physical address may have a checksum or other approach to verify its accuracy.

If there is no physical address corresponding to the logical address in the mapping, this means that the storage device does not hold that data. This may arise after a trim occurs, for example. This can be responded to immediately with a buffer of zeroes, uninitialized or old data, a failed read, a null return, or another appropriate technique. This is done without the need to read from disk, and therefore can be completed relatively quickly.

At step 703, the data is retrieved by reading from the physical location at the appropriate storage device.

At step 704, the retrieved data is validated to ensure that the retrieved data is the data which was originally stored. This may involve calculating a checksum for the retrieved data and comparing it to the checksum stored with the data. If the checksums match, it is highly likely the data was successfully retrieved. In some cases, step 704 may be omitted. For example, on reads where it is desirable to maximize throughput, step 704 may be selectively skipped.

If the checksums do not match, but the data can be reconstructed, this may be performed. This may make use of parity information stored in the same stripe as the data. An example approach for this is described below.

At step 705, the retrieved data is then returned to the process which issued the read command. This may comprise providing a success value (such as 0) as a return value to a function call.

From the point of view of the process, the data was stored at, and retrieved from, the virtual location. The management and configuration of the storage device is therefore obscured from the process which attempts to read the data.

## Recovery

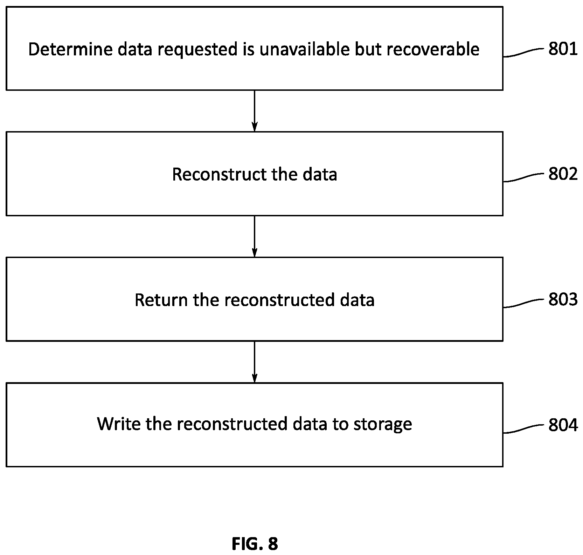

As noted above, at step 704 if the checksums do not match, but the data can be reconstructed, then reconstruction may be performed. Figure 8 shows an example process for this.

At step 801, the system determines that the data requested is unavailable but recoverable.

This may be based on a failed request at step 704. The system may have attempted, and failed, to obtain the data after a threshold time. In such a case, the system may note that the relevant storage device is degraded. Alternatively, the storage device may have been previously noted as degraded. This may be from one or more previous failures to read data or from health data reported by the storage device indicating a device failure. In another case, the data may have been obtained from the one or more storage devices already. However, if the obtained data failed a checksum, this could indicate that the storage device has become corrupted.

At step 802, the system reconstructs the data from one or more other storage devices. If the data was obtained from a block in a stripe, the data can be reconstructed from $k$ blocks on one or more other storage devices in the stripe (excluding the one or more degraded storage devices).

The selection of the storage devices from which the $k$ blocks are obtained may occur by selecting a random subset of the storage devices in the storage array. Alternatively, all other blocks in the stripe may be obtained, even though not all are required. This can allow for reconstruction to occur as soon as the fastest $k$ blocks are available.

The $k$ blocks are then erasure decoded to obtain the original data. This occurs even though the data cannot be obtained from the storage device storing the original data.

At step 803, the system returns the reconstructed data. This may occur in the same way as step 705. The program which issued the request to retrieve data may not be aware of whether the data was returned at step 705 or returned at step 803. That is, whether the data needs to be reconstructed is not apparent to the user.

At step 804, the system causes the reconstructed data to be written to storage. This occurs on one or more of the storage devices other than the degraded storage devices. As a result, metadata is updated to indicate the new physical location where the reconstructed data is stored.

In one example, this occurs in the same way as if data were being newly written to the storage (that is, in response to a write request as described below, rather than as part of reconstruction). An example of this approach is described below.

Step 804 may occur after step 803. That is, the system may return the data before the reconstructed data is written to storage. This provides a perceived higher throughput since the read request is not delayed by the additional time to write data.

After step 804, subsequent reads to obtain the same data consequently do not need to be reconstructed again. Instead, the request will read from the location where the reconstructed data was written at step 804. This results in the performance of subsequent reads for the same data recovering to the performance of a non-degraded read. This improves the overall handling capacity of the system.

During reconstruction at step 802, there may be additional data which was reconstructed, even though they were not requested to be read. In such a case, at step 804, the system may cause each additional reconstructed block to be written to the array, or may otherwise cache the other reconstructed data. This can pre-emptively avoid the need to reconstruct the remaining blocks later.

Write

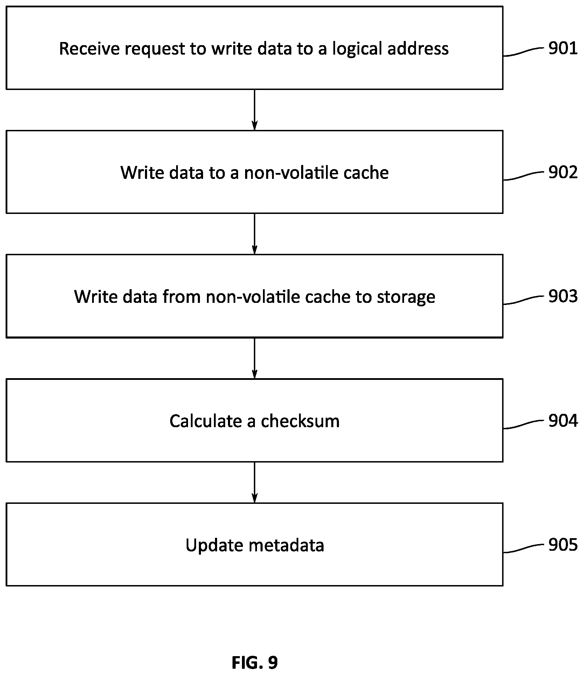

Figure 9 shows an example approach for how a write command is handled.

At step 901, a request is received to write specified data to a logical address.

At step 902, the data is written to non-volatile cache. Once written to non-volatile cache (and in some cases to other nodes in the cluster), the data can be considered to be successfully stored. In this case, the system may report the write command as being successful. As long as the non-volatile cache is not full, this provides extremely fast write performance.

In some cases, data in the non-volatile cache may have been received from many different sources. For example, in a multi-threaded context, each thread may write its own data. This means that two pieces of data received sequentially in time may be unrelated.

To mitigate this, data in the cache may be grouped in the cache by affinity. An affinity is an indication of the relationship of the data to other data. The purpose of the affinity is to indicate a likelihood that the two pieces of data are likely to be read at the same time. In one example, the affinity is calculated based on the logical address. Two pieces of data which have sequential logical addresses could have the same affinity since it is likely they would be read sequentially.

Alternatively, the affinity may be calculated as a function of one or more of:

- the logical address;
- the time at which the request was received;
- a process identifier of the process which issued the request to write data;
- a processor identifier of the processor executing the process which issued the request to write data; and
- a processor core identifier of the core of the processor executing the process which issued the request to write data.

At step 903, the data may subsequently be written from the non-volatile cache to storage.

This may be triggered when the non-volatile cache becomes sufficiently full, or if the load on the system is low enough that maintenance operations can be performed.

Data is written in stripes across multiple storage devices. Depending on the size of the stripe, this can require the data from multiple write commands to be bundled together to provide sufficient data. Thus, the data may be retained in the non-volatile cache until enough data has been received.

With respect to the placement of blocks on each storage device, writing occurs in a predetermined manner, according to preferred characteristics. In one example, within a single storage device, writing occurs sequentially. That is, each storage device writes monotonically in order irrespective of the logical address provided in the command. This improves the overall write performance. More generally, the system may use any other pattern placement logic that the system determines would result in the preferred performance characteristics.

In particular, the system writes a stripe to a plurality of storage devices based on a pointer which corresponding to a physical location of each storage device. The pointer represents the next free block of each storage device. A free block is a block in which no data is stored, or if data is stored, there is no need for that data to be retrievable. In this way, the block is appended to the sequence of blocks which have already been written. At each write, each of the plurality of storage devices writes the data at the location indicated by the pointer, which is then incremented to the next free location. Since all writing occurs at the head, there is no need for each storage device

By writing to a next free block (which, by definition, is free), there is no need to determine whether the data at the indicated block has changed. This avoids the need to initially read from the block, and therefore can result in improved performance.

Moreover, because the physical location need not be correlated with the virtual location, there is no need for the system to determine where the next free block is to achieve this. This minimizes an overhead which may otherwise occur during writes.

This approach therefore provides a high-performance approach to writing data to persistent storage device, since the read-modify-write cycle of some conventional write approaches may be avoided. In addition, because data is written sequentially, this typically results in a faster write speed.

In cases where one of the storage devices fails, the same process can still occur. The data is stored on the remaining devices. Consequently, the failure of a storage device has no meaningful effect on the speed of writing.

The data may be written to storage according to affinity. For example, it may be that the cache holds data which has sequential logical addresses, even though the data was written to the cache non-sequentially. Based on this, the system may write that data to storage sequentially based on the sequential logical addresses. This acts to defragment the data in the cache as part of the writing process. Consequently, a subsequent read for the same data may execute relatively quickly, compared to if the data had been written to storage in the same order that the system received the write requests.

At step 904, a checksum for the data at the block indicated by the physical location is calculated. The checksum may be a cryptographic hash or any other appropriate algorithm. This can be used to verify that data subsequently retrieved from the block is the same as the data stored at the block. In some cases, the checksum may comprise parity information which can correct some errors in the block.

At step 905, metadata for the persistent storage device is updated.

The metadata comprises a mapping from the logical address to the physical address. This links the logical address (which the requestor or another process can use to indicate the intended data to be retrieved) to the physical location (where the actual data is stored). The metadata further comprises the checksum for each block. As noted above, where the system has a cluster of nodes, the metadata is propagated to each node in the cluster. Additionally or alternatively, the metadata is stored on a separate persistent storage device which may be optimized for use as a cache.

This write process therefore provides high performance through the combination of a non-volatile cache and sequential writes which is generally not affected by a degraded state of the system or the performance of individual components. In particular, through the affinity-based grouping, this can result in high performance writing and subsequent reading.

Flush

While the non-volatile cache may not always trigger step 903 immediately, there may be times when it would be desirable to write the cache contents to an appropriate storage device immediately. Consequently, when a flush command is received, this may trigger steps 903, 904 and 905 to occur immediately.

In some cases, a flush command is ignored. This may be preferred where the cache is optimized for performance.

Trim

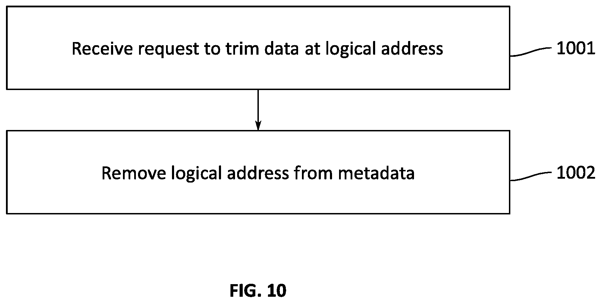

A trim command may be used to effectively delete data from storage. Figure 10 shows an example approach for how a trim command is handled.

At step 1001, a request is received to trim data at a specified logical address.

At step 1002, the system removes the logical address from the metadata.

Once the logical address is removed from the metadata, it is no longer meaningfully accessible. That is, an attempt to subsequently read the logical address may return 0s. Consequently, a trim command can be resolved quickly since only the metadata must be trimmed without the need for overwriting the original data on the storage device.

In some cases, data may additionally be overwritten on disk when being trimmed. This may be preferred in certain cases where it is desirable that the data is completely inaccessible.

Server-Side Accelerated Commands

Conventionally, when operations were performed on stored data, these would be performed by a process retrieving the data, performing the operation, then writing the data. This involves a downside: the transport of data can add significant delay to the operation.

Consequently, in a preferred arrangement, the system is configured to expose server-side accelerated commands. These enable operations to occur on data without the data being transmitted.

For example, this can include VMware vSphere Storage APIs-Array Integration (VAAI). Examples of such commands include XCopy, shallow clone, region locking (ATS), block zero, block delete / SCSI unmap, thin provisioning, and virtual volumes.

*File-Based Storage Device*

The system may be configured as a file-based storage device. File-based storage relies on data being stored in files and arranged in a hierarchy. Each file is uniquely addressable in the hierarchy.

To achieve this, the system may use a file system. Many file systems are available, including ext4, XFS, NTFS, ZFS, BeeGFS, ZFS+Lustre, IBM GPFS, IBM GlusterFS, Ceph, Intel DAOS, or any other file system. These allow data to be accessed as filed. In a preferred case, the system implements a protocol such as NFS, SMB, or CIFS. This can allow access to the files over a network.

The processes of reading and writing to a file-based storage device may otherwise be similar to those described in relation to the block storage device.

*Object-Based Storage Device*

The system may be configured as object-based storage device. Object-based storage relies on data being stored with metadata tags and a unique identifier. The system may expose an object-based storage interface, such as an interface compatible with Amazon S3.

The processes of reading and writing to an object-based storage device may otherwise be similar to those described in relation to the block storage device.

*Hyperconverged*

In some embodiments, the system may be configured to allow processes to run adjacent to the storage in a hyperconverged manner. For example, the system may allow for virtualized or containerized applications to run. This can reduce delays due to data transfer.

*Driver*

In some embodiments, the system may be presented to an operating system as a single storage device. The system may be usable with a range of operating systems, but in a preferred example, the operating system is Linux. The operating system runs software which is configured to allow access to the storage devices.

In one example, a program is configured to access the memory and/or the storage. In a Linux context, this may be a kernel module so that the program can interact with hardware. Alternatively, this may be a userspace module. The program may be analogous to a device driver and may present a block device interface. That is, for the purpose of the operating system, there may be a single block storage device irrespective of the underlying hardware implementation.

A further program may be provided to operate as a userspace module. This may be preferable where functionality can be executed at the user level, or in other words, requires less privileges. That is, functionality that can be performed at the user level may be preferentially included in the userspace module, with only functionality that requires operation in kernel mode may be included in the kernel module. For example, if the system provides for encoding before writing to storage, the encoding may be handled by the userspace module, and the writing may be handled by the kernel module.

In some cases, the driver may be configured to be POSIX compliant. One aspect of POSIX compliance is that transactions can be performed atomically and in a specifiable order. That is, if a transaction involves four blocks to be written, the driver guarantees that either all four blocks will be written (or none will be written) before a subsequent transaction is performed. This may be accomplished by the driver receiving acknowledgment that each block has been written within a transaction before moving onto a subsequent transaction. The driver may implement a suitable interface to enable atomic transactions. For example, an asynchronous I/O interface, such as the libaio interface, may be used.

*Encryption*

In some embodiments, data may be encrypted during writing. Such encryption may occur at the stripe, storage device or storage array level. That is, an entire storage array may be encrypted as a single unit. Where this occurs, the encryption keys may be stored in metadata. During each write operation, the added data may be encrypted under the same scheme. During each read operation, the read data may be decrypted before being returned.

**Stripe Protection**

As data is written to the storage devices, it may be encoded to form protected stripes. In some cases, this comprises a forward error correction code. This may include a block code, a cyclic code, or a Bose-Chaudhuri-Hocquenghem code, such as a Reed-Solomon code, convolutional code, Viterbi code, low-density parity-check (LDPC) code, a Turbo code, or any other appropriate coding approach.

In some embodiments, the erasure encoding approach uses a maximum distance separable code (MDS), in which a piece of data is encoded to form n data fragments. The original data is recoverable from any $k$ data fragments ($k \leq n$). Each data fragment is a w-bit word, where w can be any positive integer. For example, 1-bit and 8-bit are common. Generally, the higher the values for n and w, the more computationally intensive the erasure encoding and decoding process is.

First, the original data is segmented into w × k-bit data segments.

Second, $k$ data fragments $d_1 \ldots d_k$ are formed by separating each data segment into $k$ w-bit sized data words. These are data words.

Third, $m = n - k$ data fragments $c_1 \ldots c_m$ are

formed based on linear combinations of the data words with coefficients, such that:

$$c_i = a_{i,0}d_0 + \cdots + a_{i,k}d_k$$

where the arithmetic is defined over the Galois field $GF(2^w)$. These are coding words.

The data fragments can be stored in a stripe over an array of persistent storage devices, such that the data fragments are distributed over the persistent storage devices. In some cases, different persistent storage devices can hold different numbers of data fragments. Optionally, a checksum based on the data segment is also stored. Once all data segments are stored, a further checksum based on the original data can also be stored.

There are multiple ways to select the coefficients. One approach is to use a Cauchy Reed-Solomon code. This occurs by selecting $n$ numbers in $GF(2^w)$ and partitioning them into two distinct sets $X = \{x_1, ..., x_m\}$ and $Y = \{y_1, ..., y_k\}$, with $X \cap Y = 0$ such that:

$$a_{i,j} = \frac{1}{x_i + y_j}$$

where the arithmetic is defined over the Galois field $GF(2^w)$.

Once the data is stored, any $k$ of the data fragments can be used to retrieve the data. For example, if the data words $d_1 ... d_k$ were obtained, these can be combined using the inverse of how they were segmented. If a coding word $c_i$ is used, a system of equations based on the equation noted above can be solved to obtain the missing data fragment.

In some situations, erasure encoding can be performed efficiently using one or more GPUs while the request itself is handled by one or more CPUs. This can result in improved overall performance.

Erasure encoding provides an approach which allows for high resilience and flexibility. The data fragments can be stored across multiple independent systems. If m or fewer fragments are lost, the corresponding data segment can be recovered, and thus the original data can be calculated. In addition, any $k$ data fragments can be used to recover the original data, which allows any of the storing systems to respond.

Storing erasure encoded data provides a number of benefits.

First, the level of redundancy can be freely adjusted according to requirements. In different implementations, it may be preferred to have higher or lower levels of redundancy. This can be freely adjusted by changing the values for m and $k$. Consequently, this provides a flexible approach for administering a storage system according to particular implementation requirements.

Second, this approach allows data to be moved around flexibly. Because of the nature of erasure encoding, a given piece of data can be retrieved from multiple locations in the storage system. These locations may be freely adjusted as necessary by updating metadata. This provides high flexibility in where data is stored. For example, if a storage device fails, a new storage device may be inserted, and the data moved (or recomputed and rewritten) to the new storage device without any interruption in the system.

Third, this can occur even without a diminution in performance. That is, even if some storage devices have failed, the system may still handle a read request by simply reading from other storage devices. Recovery of parts of a failed storage device may occur without having to recovery a whole storage device. Consequently, even when hardware fails, the system may operate in a usual way. This can allow for fast failure and consequently fast recovery without the excessive overhead traditionally associated with recovering RAID or similar systems.

These approaches allow the use of hardware which may not necessarily be fast or reliable inherently. For example, hard disk drives may be relatively slow with random access, and NAND flash memory may wear out when excessively written to. The approaches disclosed overcome this by minimizing engagement with the devices, which allows the advantages of hardware (such as the low cost of hard disk drives or the high speed of NAND flash memory) to be realized without the disadvantages.

For example, in one approach, the system uses a redirection layer between physical and logical storage addresses. This can be set up for sequential writing, such that even if writing is performed by multiple processes in substantially random logical locations, the system can convert this to a sequential stream of writes. This provides very high write throughput despite conventional hardware being used.

**Self-Optimization and Self-Healing**

The system periodically moves the location at which data is stored. This may occur as part of a self-healing process, where the system aims to recover sufficient resilience or high performance after a fault occurs. This may also occur as part of a self-optimization process, where the system aims to improve resilience or performance without a fault occurring.

These processes generally make use of the decoupling of the logical address and the physical address. The system can move data freely, and consequently change the physical address of the data, without the need to change the logical address. Because external processes use the logical address, from the point of view of any external process, the location of the data does not change. Consequently, using a redirection layer between physical addresses and logical addresses enables various self-healing and self-optimization processes.

*Self-Optimization*

In some cases, the system may perform processes to improve performance or maintain resilience without a fault occurring. This may be called self-optimization.

The purpose of self-optimization is generally to maintain the resilience or performance of the system. In some embodiments, the system may be configured to maximize one or more pre-determined metrics.

A first example metric may be to minimize latency. The system may perform defragmentation of the data by moving data in such a way that the latency of a process obtaining an arbitrary piece of data is minimized. This may be weighted by the likelihood of access: reducing the latency of a single piece of data that is accessed frequently may be regarded as more important than reducing the latency of multiple pieces of data that are never accessed.

A second example metric may be to maximize the lifecycle of the storage devices. Many types of storage devices, such as hard disks, can wear out when read or written to too frequently. If a single storage device, or a single part of a storage device, is being used disproportionately, this can lead to early failure compared to other comparable storage devices. Consequently, the system may move data so that all storage devices are read from or written to a relatively similar frequency. Other types of storage devices may benefit from consistent read rates, consistent write rates, consistent power usage, scheduled down time, or other device specific characteristics.

A third example metric may be to minimize the chance of data loss.

A fourth example metric may be to minimize the amount of computation that must be done immediately. This can be contrasted with computation that may be put off to a future period (for example, during self-optimization).

A fifth example metric may be to optimize garbage collection by placing data that is less likely to be modified together.

These metrics may be constantly analysed through the performance of the system. For example, there may be plugins or bots which periodically assess metrics and/or may undertake processes to maximize the metrics.

In a first example, data may be re-ordered based on expected read patterns. The system may identify a sequence of data which are currently stored non-sequentially but are likely to be read sequentially. By moving this data to be sequential in the storage device (particularly if the storage device is adapted for sequential reading, such as hard disk drives), the storage device may be able to obtain the sequence of data more quickly. Alternatively, the data may be moved across multiple storage devices to allow for parallel reading to further increase performance.

In a second example, one or more of the storage devices (or other components) may be pre-emptively failed. If it appears that a subset of the storage devices is slowing the overall system performance, removing that subset of the storage devices would not cause data loss, and removing that subset would optimise the metrics, then the system may treat that subset as having failed. This may subsequently require a self-healing process.

In a third example, an alert may be raised, or log entry is added when the metrics reach a threshold. This may prompt a user to take remedial action.

In some embodiments, the metrics are supported by artificial intelligence. In a first example, a machine learning system may have been trained to determine when a drive failure is imminent based on various analytics provided by the drive. In a second example, the system may learn access patterns in order to predict likely sequences of reads. This may be specific to a particular implementation in such a way that general rules cannot be derived.

*Self-Healing*

In preferred embodiments, the system is self-healing. Self-healing refers to the system being able to continue operating after at least one failure without irremediable data loss and without long-term diminution of performance. The failures may be the failure of a cluster, a node, a storage array, a storage device, or any component in the system. In some cases, multiple components can fail at the same time. This may be particularly likely in high noise environments, such as in military applications.

In some cases, the data stored at a location may be unavailable (for example, due to hardware failure). However, a self-healing system ensures that this data is recoverable (for example, from one or more other locations). This may require writing the recovered data to a further location to ensure that the full level of resilience is restored to the level it was before the failure.

In some cases, there may also be a temporary loss of performance. For example, if a node fails, the data stored at that node may need to be recalculated from other nodes and this may involve a small delay. However, any such loss of performance is expected to be remedied quickly.

*Resizing*

Over time, it may be desirable to increase the size of the storage available to the system. This may occur through adding further storage devices. The system may start using those storage devices in further writes. This does not affect past writes, and therefore increasing the size of storage in the system involves negligible computational overhead, and so no meaningful decrease in performance. Conversely, if it is desirable to decrease the storage space, one or more of the storage devices may simply be removed. While this will require self-healing, this occurs without any meaningful degradation in write performance. Consequently, the system may have its storage increased or decreased without meaningfully affecting overall performance.

*Adjustable Resilience*

From time to time, it may be desirable to adjust the level of resilience. For example, it may be desired to increase or decrease the parity used. This may be done simply through configuration. When the parity setting changes, subsequent writes will use the new parity setting. This does not affect past writes, and therefore has negligible computational overhead. Parity may therefore be increased or decreased in use.

**Intelligent Placement**

The system is configured to store data on one or more storage devices. As noted above, in a simple arrangement, data may be written to storage devices in regions of monotonically sequential writes. Such sequential writing allows for relatively fast write throughput. In addition, this can improve the lifespan of devices, since it avoids a read-modify-write cycle that may occur during random non-sequential writes.

However, in some cases, the system may be configured to optimize the placement of data on the one or more storage devices. In some cases, "optimize" may be in respect of the expected time to resolve a read or a write request for the data. "Optimize" may additionally or alternatively mean maximizing the lifespan of the storage devices.

In a first embodiment, data is written based on the characteristics of the storage device. For example, there may be different tiers of device. Hard disk drives may be slower than flash storage.

Consequently, when the system is to write data, the system may determine a preferred speed of read and write of the data. Additionally or alternatively, the system may take a "greedy" approach and always prefer the highest speed possible at the time. Either approach may provide the highest performance depending on the application.

The system will then write to the part of the storage device that matches the preferred speed. For example, if the preferred speed is "maximum speed", the storage device may write to the fastest storage device (such as flash). If the preferred speed is "low speed", the storage device may write to a slower storage device (such as hard disk drives).

In this manner, the performance characteristics of different types of data may be controlled intelligently.

In a second embodiment, data is written to parts of storage device based on the characteristics of the storage device. For example, because hard disk drives use round platters which spin to enable reading and writing, at a given rotational speed the outside of the platter tends to have a greater velocity than the inside. Consequently, the read and write performance of a hard disk drive storage device is dependent, at least in part, on where on the platter the data is stored.

Consequently, when the system is to write data, the system may determine a preferred speed of read and write of the data. Additionally or alternatively, the system may take a "greedy" approach and always prefer the highest speed possible at the time. Either approach may provide the highest performance depending on the application.

The system will then write to the part of the storage device that matches the preferred speed. For example, if the preferred speed is "maximum speed", the storage device may write to the outside of a hard disk drive storage device. If the preferred speed is "low speed", the storage device may write to the inside of a hard disk storage device.

In this way, different types of data may be stored at different levels of service.

In a third embodiment, the style of write may be adjusted based on the type of storage device.

Some kinds of storage device degrade from use. For example, QLC flash has a limited lifespan based on the number of writes (particularly because of erase cycles). If this is the storage device, it is therefore preferable to minimize the number of writes.

Consequently, the system may consider the type of storage device in determining whether and how much to write in a single operation, or whether to continue to buffer data.

In a fourth embodiment, the system may store data differently depending on the type of the data (for example, whether it is a block, file, or object). Different types of data may have different access characteristics. A file tends to be access in a single unit, whereas a block may be randomly accessed. Consequently, by storing data based on the type of data, this may improve overall performance.

*Zoned Drives*

In some embodiments, the storage devices are zoned storage devices, such as zoned block devices (ZBDs). ZBDs are block storage devices that have their address space divided into zones. For example, a zone may be 128-256 MB. The size of a zone may vary across the storage device, though may be consistent.

A zone may only be written to sequentially and starting from the beginning of the zone. In addition, data within a zone cannot be arbitrarily overwritten. The only way to overwrite an already written zone is to reset the zone write pointer, effectively deleting all the data in the zone, and to restart writing from the beginning of the zone. Reading data, on the other hand, is largely unrestricted and the data can be read in the same manner as on traditional storage devices.

The benefit of a zone storage device, compared to a conventional storage device, is that zone storage devices may be denser. That is, a single zone storage device of given dimensions may store a greater amount of data than a conventional storage device. However, in some applications, the downsides associated with a zone storage device might outweigh the benefits.

However, a zoned device may be particularly suited for the sequential writing approaches noted above. That is, since zones must be written to sequentially and the approaches noted above necessarily write to storage devices sequentially, there is a natural match. That is, the limitations in how zoned storage devices are written to are not a disadvantage using the techniques above. A zone storage device therefore can provide higher storage density with no meaningful disadvantage.

In some embodiments, the system may be configured to keep some zones empty. For example, in a garbage collection process or a writing process, the system may determine that zones meeting predetermined conditions should be kept empty. The condition may be that the zones are sufficiently large, for example.

These large, reserved zones may then be used in a garbage collection process to write data which is naturally likely to be read sequentially. That is, when the system determines that certain data is likely to be read at the same time, a read request may be resolved faster if the data is stored sequentially on the storage device. Consequently, reserved zones may be used for this purpose.

*Mapping Cache*

As data is written, a mapping between virtual and physical locations is kept. The virtual location is where external processes would consider the data to be stored. The physical location is where on the storage devices the data is actually stored. These may be unrelated. This allows the system to store the data wherever is most appropriate without the external process being aware of this.

The mapping is therefore necessary to resolve a virtual address into the underlying data. At each write, the mapping must be updated. The rate at which entries can enter the mapping may therefore limit the speed at which data can be written.

The system may therefore adjust how the mapping is stored based on the speed at which the mapping needs to be updated or accessed. This may vary based on the type of data being written or read. The system may dynamically switch between approaches for storing the mapping based on actual performance of the system.

For example, large amounts of linear data require relatively few updates to the mapping when written to storage devices. This may occur when a large file is being written to hard disk drives. In this case, because the frequency of updates to the mapping is relatively low, the mapping may be in a normal speed cache. For example, this may be on the storage devices.

In one example, the system receives many random reads. In this case, each read requires a request to the mapping. A slow cache would therefore reduce the performance of the system. In this case, the system may duplicate the mapping in a faster cache and/or may increase the size of the cache.

For example, by default the mapping may be exclusively stored in non-volatile cache. This means that if the cache loses power, no data is lost. However, where higher performance is needed, the mapping may additionally or alternatively be stored in volatile cache, such as DRAM. This may be preferred where a volatile cache would be faster for reading.

The mapping may be stored in a protected manner to prevent mapping loss or errors from occurring. In some cases, the mapping may be stored in the same manner as other data.

**Interpretation**

A number of methods have been described above. Any of these methods may be embodied in a series of instructions, which may form a computer program. These instructions, or this computer program, may be stored on a computer readable medium, which may be non-transitory. When executed, these instructions or this program cause a processor to perform the described methods.

Where an approach has been described as being implemented by a processor, this may comprise a plurality of processors. That is, at least in the case of processors, the singular should be interpreted as including the plural. Where methods comprise multiple steps, different steps or different parts of a step may be performed by different processors.

The steps of the methods have been described in a particular order for ease of understanding. However, the steps can be performed in a different order from that specified, or with steps being performed in parallel. This is the case in all methods except where one step is dependent on another having been performed.

The term "comprises" and other grammatical forms is intended to have an inclusive meaning unless otherwise noted. That is, they should be taken to mean an inclusion of the listed components, and possibly of other non-specified components or elements.

While the present invention has been explained by the description of certain embodiments, the invention is not restricted to these embodiments. It is possible to modify these embodiments without departing from the spirit or scope of the invention.

**Claims**

**1.** A system, comprising:

a plurality of clusters, each cluster comprising two or more nodes and data storage;
data storage comprising two or more storage arrays;
each storage array comprising two or more storage devices;
each storage device being configured to store data;
each node being configured to receive requests to interact with data stored on a storage device;
wherein the system is configured to provide at least two communication paths between any pair of components, the components comprising the nodes, storage arrays, and the storage devices.

**2.** The system of claim 1, wherein a first cluster and a second cluster are physically distant.

**3.** The system of claim 1 or 2, wherein each node is configured for access to all data stored at a corresponding cluster.

**4.** The system of claim 3, wherein each node comprises metadata to enable access to data stored at a corresponding cluster.

**5.** The system of claim 4, wherein metadata is synchronized between nodes in a cluster.

**6.** The system of claim 5, wherein each cluster comprises a node manager configured to synchronize metadata between nodes.

**7.** The system of any one of claims 1 to 6, wherein each cluster comprises a load balancing node configured to distribute requests among the nodes of the cluster.

**8.** The system of any one of claims 1 to 7, wherein each node is configured to act as a storage controller by interfacing with data storage.

**9.** The system of claim 8, wherein the node is configured to run a driver to interface directly with each of the two or more storage arrays in the corresponding cluster.

**10.** The system of any one of claims 1 to 9, wherein the one or more storage devices are the same size of storage.

**11.** The system of any one of claims 1 to 10, wherein the storage array comprises a virtual storage array, and the one or more storage devices are accessible over a network.

**12.** The system of any one of claims 1 to 11, wherein a first storage array comprises storage devices of a first type, and a second storage array comprises storage devices of a second type.

**13.** The system of any one of claims 1 to 12, wherein the storage devices are tiered.

**14.** The system of any one of claims 1 to 13, wherein each node in a cluster is configured to interact with each storage array.

**15.** The system of any one of claims 1 to 14, wherein the system is configured as one or more of:

an on-premises system configured to be collocated with one or more applications of a user;
a cloud system configured to be virtualized;
a multi-site system configured to be distributed over a plurality of physical locations interconnected with a network; and
a multi-cloud system configured to operate over a plurality of cloud services.

100
CLUSTER 102
NODE 104
NODE 104
NODE MANAGER 106
LOAD BALANCER 108
STORAGE 110
STORAGE ARRAY 112
STORAGE DEVICE 114
STORAGE DEVICE 114
STORAGE DEVICE 114
STORAGE 110
STORAGE ARRAY 112
STORAGE DEVICE 114
STORAGE DEVICE 114
STORAGE DEVICE 114

FIG. 1

NODE 104
MOTHERBOARD 202
PROCESSOR 204
PROCESSOR 204
MEMORY 206
PERIPHERAL 208
PERIPHERAL 208

FIG. 2

STORAGE
304
NODE
302
NODE
302
NODE
302
STORAGE
304
STORAGE
304

FIG. 3

Determine a node should be disabled
401
Disable the node
402
Determine the node should be re-enabled
403
Enable the node
404

FIG. 4

Determine which node is designated as active
501
Determine the active node meets a demotion criterion
502
Determine a new active node
503
Promote determined node to be active and demote previously active node to be passive
504

FIG. 5

Determine a degraded node requires metadata recovery
601
Determine non-degrade node that can provide metadata
602
Cause non-degraded node to transmit metadata to degraded node
603
Determine the degraded node has recovered its metadata
604

FIG. 6

Receive command to read data from a logical address
701
Obtain physical address for data of the logical address
702
Retrieve data from physical location of storage device
703
Validate the retrieved data
704
Return the retrieved data
705

FIG. 7

Determine data requested is unavailable but recoverable
801
Reconstruct the data
802
Return the reconstructed data
803
Write the reconstructed data to storage
804

FIG. 8

Receive request to write data to a logical address
901
Write data to a non-volatile cache
902
Write data from non-volatile cache to storage
903
Calculate a checksum
904
Update metadata
905

FIG. 9

Receive request to trim data at logical address
1001
Remove logical address from metadata
1002

FIG. 10